Europäisches Patentamt

European Patent Office

Office européen des brevets

(11) Publication number: **0 511 622 A2**

# EUROPEAN PATENT APPLICATION

(21) Application number: **92107195.7**

(22) Date of filing: **28.04.92**

(51) Int. Cl.5: **G11B 5/82**

(30) Priority: **01.05.91 JP 126505/91**
**17.07.91 JP 201192/91**

(43) Date of publication of application:
**04.11.92 Bulletin 92/45**

(84) Designated Contracting States:
**DE FR**

(71) Applicant: **Hitachi Maxell Ltd.**
**1-88, Ushitora-1-chome, Ibaraki-shi**
**Osaka-fu(JP)**

(72) Inventor: **Fukunaga, Kazuya**
**10-9, Goshogaoka-3-chome, Moriyamachi**
**Kitasoma-gun, Ibaraki-ken(JP)**
Inventor: **Umebayashi, Nobuhiro**
**Sateraito Hausu 315, 7-17, Azuma-3-chome**
**Tsukuba-shi(JP)**
Inventor: **Kishimoto, Mikio**
**10-18, Matsumaedai-7-chome, Moriyamachi**
**Kitasoma-gun, Ibaraki-ken(JP)**
Inventor: **Mizushima, Kunio**
**5-4, Matsushiro-4-chome**
**Tsukuba-shi(JP)**
Inventor: **Doi, Toshio**
**14-2, Sekido-2-chome**
**Tama-shi(JP)**

(74) Representative: **Patentanwälte Beetz - Timpe -**
**Siegfried - Schmitt-Fumian- Mayr**
**Steinsdorfstrasse 10**
**W-8000 München 22(DE)**

(54) **Magnetic disk.**

(57) There is provided a magnetic disk with excellent durability and high reliability and less occurrence of dropout.

Discontinuous recessed portions (31) an average depth of which from the portion where the magnetic disk comes into contact with a magnetic head unit is regulated to the range of 0.01 to 0.5 micron are formed on the recording track (16) of a magnetic layer.

Further, a total length ($Tc = c1 + c2$) in a recording track-widthwise direction of the recessed portions (31) is regulated to 50 % or less of a recording track width (b).

FIG. 13

BACKGROUND OF THE INVENTION

FIELD OF THE INVENTION

The present invention relates to a magnetic disk such as a flexible magnetic disk, hard magnetic disk and the like, and more specifically, to a magnetic disk having a magnetic layer the durability of which is improved.

DESCRIPTION OF THE RELATED ART

A flexible magnetic disk is mainly arranged as a magnetic layer formed on a non-magnetic substrate composed of a synthetic resin film. In order to improve the durability of the magnetic layer in such a magnetic recording medium, a most suitable binder, filler, lubricant and the like are used in the magnetic layer.

Nevertheless, the magnetic disk is stuck to a magnetic head unit by a slight change of the surface of the magnetic layer caused by contact of the magnetic layer with the magnetic head unit, by which a starting torque is increased. This sticking phenomenon is particularly liable to be caused in a magnetic disk having a magnetic layer with a surface roughness Ra (cut off: 0.08 mm) of 0.01 micron or less. More specifically, although the surface roughness of the magnetic layer is made as small as possible to reduce a spacing loss between the magnetic disk and the magnetic head unit, the magnetic disk is stuck or adhered to the magnetic head unit by the effect of a lubricant added to the magnetic layer (which oozes out to the surface of the magnetic layer while the magnetic disk rotates) and thus the starting torque of the magnetic disk is increased.

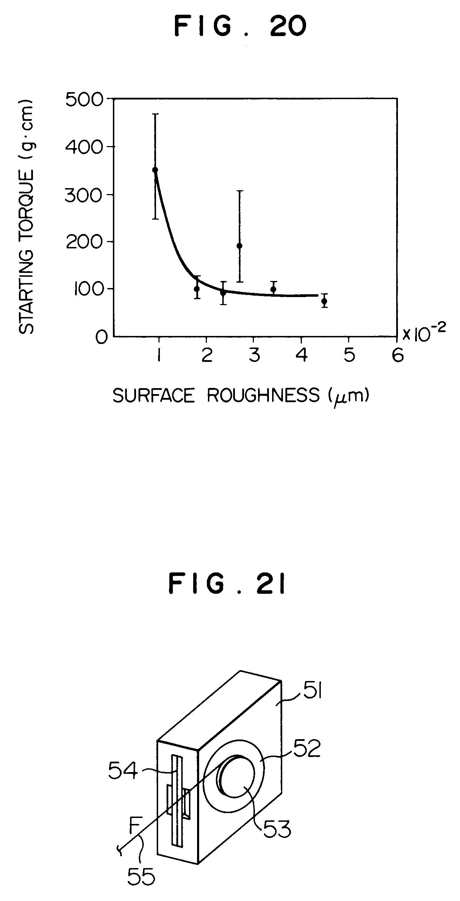

Figure 20 shows a relationship between a surface roughness Ra of a magnetic layer and a starting torque and Figure 21 is a perspective view of a starting torque measurement apparatus.

In Figure 20, reference numeral 51 designates a disk drive unit, 52 designates a motor, 53 designates a disk, 54 designates a magnetic disk cartridge a starting torque of which is to be measured, and 55 designates a string. Note that a starting torque T of the magnetic disk is determined by the following formula.

$$T = F \cdot r$$

> F:     tension of the string 55
> r:     radius of the disk 53

As shown in Figure 20, the surface roughness of the magnetic disk is correlated with the starting torque thereof. When the surface roughness is reduced, the starting torque is abruptly increased. A range over which the measured torque is dispersed is also increased (each range being shown by a vertical line segment in Figure 20).

The increase in the starting torque as described above not only increases a power consumption of a drive motor but also causes the magnetic disk to travel or rotate unstably, which adversely affects recording/reproducing characteristics, and thus a problem arises in the reliability of operation.

On the other hand, when an amount of the lubricant to be contained in the magnetic layer is reduced, the magnetic disk is restricted from being adhered or stuck to the magnetic disk and thus the starting torque of the magnetic disk is reduced. In this case, however, durability of the magnetic disk is degraded in correspondence with the reduced amount of the lubricant, and thus this is not advantageous.

Further, as described above, a conventional magnetic disk has a flat surface and the entire surface of the magnetic disk faced to the head surface of a magnetic head unit is in intimate contact with the surface of the head. Thus, when wear powder is produced by a sliding contact between the magnetic disk and the magnetic head unit, the wear powder is deposited on the intimate contact interfaces of the magnetic disk and the head surface, and the magnetic disk is further worn thereby, which causes a disadvantage in that the durability of the magnetic disk is lowered and further an increase in an amount of the wear powder may cause an error.

SUMMARY OF THE INVENTION

An object of the present invention is to provide a magnetic disk having high reliability and excellent durability by which the above drawbacks of prior art are overcome and the occurrence of errors is greatly reduced.

To achieve the above object, the present invention provides a magnetic disk having a substrate of a non-magnetic material such as a flexible base film and a magnetic layer formed on a surface thereof, the magnetic disk comprising a multiplicity of discontinuous recessed portions, on the recording tracks of the magnetic layer, an average depth of which form a portion where the magnetic disk comes into contact with a magnetic head unit is regulated to a range of 0.01 to 0.5 micron, wherein a total length in a recording track-widthwise direction of the recessed portions is regulated to 50% or less of a recording track width.

To achieve the above object, the present invention further provides a magnetic disk having a substrate of a non-magnetic material and a magnetic layer formed on a surface thereof, the magnetic disk comprising discontinuous recessed portions formed on the recording track of the magnetic layer and having an average depth from a portion where the magnetic disk comes into contact with a magnetic head unit in a range of 1/80 to 1/8 of the shortest wavelength of a signal recorded to the magnetic disk, wherein a total length in a recording track-widthwise direction of the recessed portions is regulated to 50% or less of a recording track width.

The present invention reduces a contact resistance (friction resistance) of the magnetic disk with a magnetic head unit while suppressing the occurrence of dropout and utilizes the recessed portions for collecting dusts and the like such as wear powder, by such an arrangement that the multiplicity of discontinuous recessed portions, on the recording tracks of the magnetic layer, the average depth of which from the portion where the magnetic disk comes into contact with the magnetic head unit is regulated to the range of 0.01 to 0.5 micron, wherein the total length in the recording track-widthwise direction of the recessed portions is regulated to 50% or less of the recording track width.

When a signal is recorded, a magnetic field from a magnetic head penetrates into the magnetic layer by a distance of $\lambda/4$ ($\lambda$: recording wavelength) from the magnetic head. Therefore, when recessed portions have a depth greater than $\lambda/4$, the magnetic field from the magnetic head does not reach the magnetic layer at the bottom of the recessed portions and thus an output upon reproduction or read-out is greatly reduced.

According to the present invention, the reduction of a reproduction output is regulated to a degree by which no problem is arisen in a practical use by regulating the average depth of recessed portions to 1/80 to 1/8 of the recording wavelength ($\lambda$) and the length in the recording track-widthwise direction of the recessed portions to 50% or less of the recording track width, and further the contact resistance of the magnetic disk with the magnetic head is reduced while suppressing the occurrence of dropout and the recessed portions are utilized for collecting dusts and the like such as wear powder.

With this arrangement, the adverse effect of the dusts and the like between a magnetic layer and a head surface can be greatly reduced and thus a magnetic disk with excellent durability and high reliability can be provided.

BRIEF DESCRIPTION OF THE DRAWINGS

Figure 1 is a partially exploded perspective view of a magnetic disk cartridge according to an embodiment of the present invention;

Figure 2 is an enlarged cross-sectional view of a magnetic disk of the magnetic disk cartridge of Fig. 1;

Figure 3 is a plan view of the magnetic disk of the magnetic disk cartridge of Fig. 1;

Figure 4 is an enlarged cross-sectional view of a cleaning sheet used in the magnetic disk cartridge of Fig. 1;

Figure 5 is an enlarged cross-sectional view of the vicinity of a magnetic head insertion port for illustrating a state in which the magnetic disk cartridge of Fig. 1 is used;

Figure 6 is an enlarged cross-sectional view of the vicinity of an elastic piece of the magnetic disk cartridge of Fig. 1;

Figure 7 is enlarged plan view of a part of the magnetic disk used in the magnetic disk cartridge of Fig. 1;

Figure 8 is a chart showing a condition of a surface of a second magnetic layer of the magnetic disk;

Figure 9 is a diagrammatic sectional view for explaining the processing of recessed portions of the magnetic disk;

Figure 10 is a diagrammatic sectional view for explaining tracking of a magnetic disk;

Figure 11 is a diagrammatic view for explaining tracking of a magnetic disk;

Figure 12 is a plan view of a side of a first magnetic layer of the magnetic disk;

Figure 13 is an enlarged plan view of the first magnetic layer;

Figure 14 is a chart showing condition of a surface of the first magnetic layer;

Figure 15 is an enlarged plan view showing a modification of the first magnetic layer;

Figure 16 is an enlarged cross-sectional view of a modification of recessed portions;

Figure 17 is a plan view showing a modification of the magnetic disk;

Figure 18 is a plan view showing a further modification of the magnetic disk;

Figure 19 is a graph showing a characteristic of the occurrence of errors;

Figure 20 is a graph showing a characteristic relationship between a surface roughness of the magnetic layer and a starting torque; and

Figure 21 is a perspective view of a starting torque measurement apparatus.

DESCRIPTION OF PREFERRED EMBODIMENTS

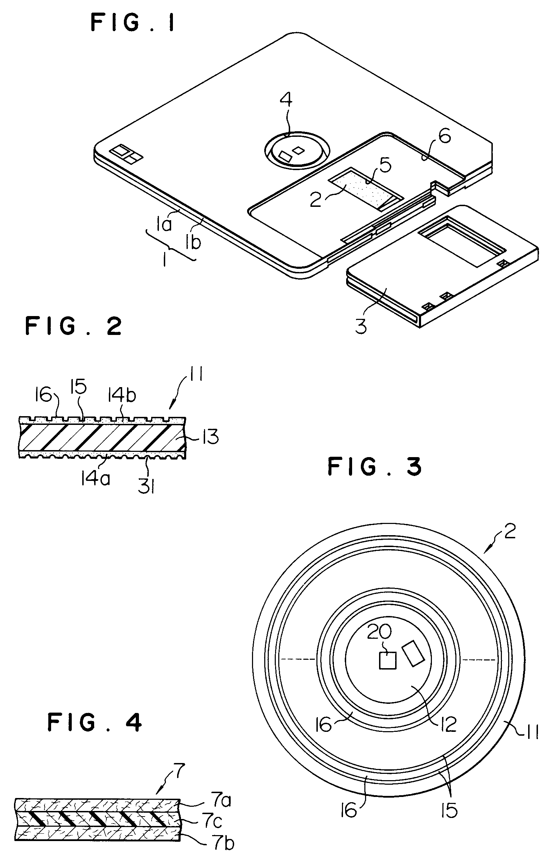

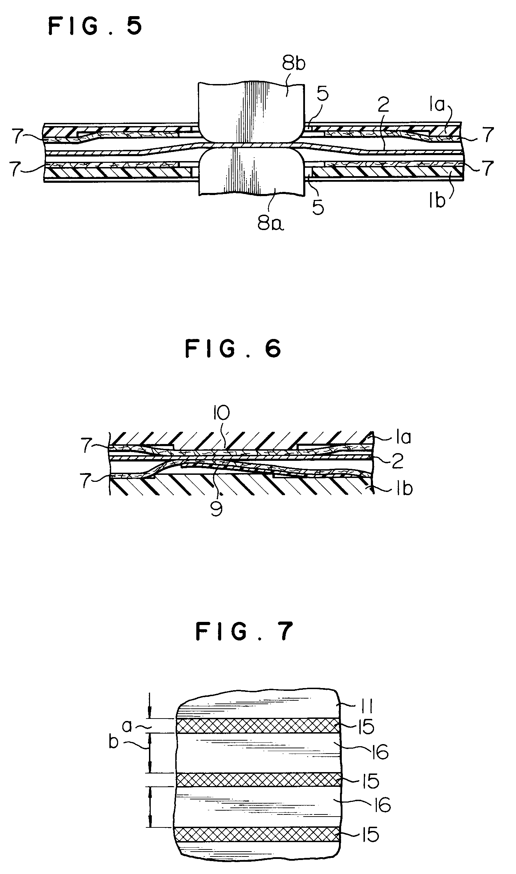

Now, the embodiments of the present invention will be described with reference to the drawings. Figure 1 is a partially exploded perspective view of a magnetic disk cartridge according to an embodiment of the invention, Figure 2 is an enlarged cross-sectional view of a magnetic sheet, Figure 3 is a plan view of a magnetic disk, Figure 4 is an enlarged cross-sectional view of a cleaning sheet, Figure 5 is an enlarged cross-sectional view of the vicinity of a magnetic head insertion port for illustrating the state in which the magnetic disk cartridge is used, and Figure 6 is an enlarged cross sectional view of the vicinity of the elastic piece of the magnetic disk cartridge.

As shown in Figure 1, the magnetic disk cartridge is mainly composed of a cartridge case 1, a flexible magnetic disk 2 rotatably accommodated in the cartridge case 1 and a shutter 3 slidingly supported by the cartridge case 1.

The cartridge case 1 is composed of an upper case 1a and lower case 1b which are injection-molded from a hard synthetic resin such as ABS resin.

An opening 4 into which a rotatable drive shaft is inserted is defined substantially at the center of the lower case 1b, and a rectangular hard insertion or access port 5 is defined in the vicinity of the opening 4. Another head insertion port 5 is also defined in the upper case 1a in the same way (refer to Figure 5). As shown in Figure 1, a little lowered and recessed portion 6 is defined in the vicinity of the front side of each of the upper and lower cases 1a and 1b to regulate a sliding range of the above shutter 3 and each of the above head insertion port 5 is defined at an intermediate position of this recessed portion 6.

As shown in Figures 5 and 6, a cleaning sheet 7 is bonded to an inner surface of each of the upper and lower cases 1a and 1b by means, for example, of ultrasonic welding or the like. As shown in Figure 4, this cleaning sheet 7 is composed of a disk-side nonwoven fabric layer 7a coming into contact with the magnetic disk 2, case-side nonwoven fabric layer 7b coming into contact with the cartridge case 1, and an intermediate nonwoven fabric layer 7c for connecting the disk-side nonwoven fabric layer 7a with the case-side nonwoven fabric layer 7b.

The disk-side and case-side nonwoven fabric layers 7a and 7b are composed only of rayon fibers and made such that the front or one side of them can not be discriminated from the back or another side thereof. The intermediate non-woven fabric layer 7c is composed of a mixed layer of rayon fibers and thermoplastic fibers. For example, polyamide, polyethylene terephthalate, polyethylene, polypropylene, polystyrene, polyvinyl chloride, acrylic fiber or the like is used as the thermoplastic fiber.

Nonwoven fabric composed only of acrylic fibers or polyester fibers, mixedly spun acrylic fiber and polyester fiber, or rayon fiber mixedly spun therewith may be used as the nonwoven fabric layers 7a and 7b.

As shown in Figure 5, when the magnetic disk cartridge is in use, a first magnetic head unit 8a including a head core for performing magnetic reading/writing and a slider for ensuring that the head core is stably in contact with the magnetic disk and a second magnetic head unit 8b including a head core and slider similarly to the first magnetic head unit 8a are inserted through the head insertion ports 5, 5, respectively and the magnetic disk 2 is rotated in such a state that it is nipped by and between both magnetic head units 8a and 8b, so that signals are written and read by both magnetic head units 8a and 8b. The magnetic head unit used in the present invention does not always need the aforesaid slider and may only hold the head cores in a predetermined configuration.

Further, as shown in Figure 6, an elastic piece 9 made by bending a plastic sheet composed of polyester or the like is attached to an inside surface of the lower case 1b in an inclined state. Further, a projection 10 is formed on an inside surface of the upper case 1a at a position thereof confronting the elastic piece 9. Therefore, a portion of the lower cleaning sheet 7 is lifted upward by the elastic piece 9, while the lifted cleaning sheet 7 is slightly pressed downward by the projection 10 of the upper case 1a, so that the magnetic disk 2 is elastically nipped between the upper and lower cleaning sheets 7, 7. Then, as the magnetic disk 2 is rotated, the surfaces of the disk 2 is cleaned by the cleaning sheet 7, 7.

Now, the arrangement of the magnetic disk 2 will be described. As shown in Figure 3, the magnetic disk 2 is composed of a disk-shaped flexible magnetic sheet 11 and a center hub 12 inserted and bonded to a central hole of the magnetic sheet 11.

Further, as shown in Figure 2, the magnetic sheet 11 is composed of a base film 13 made of a transparent polyester film or the like and magnetic layers 14a, 14b deposited on both surfaces of the base film 13.

A synthetic resin film of, for example, polyethylene terephthalate (PET), polyethylene naphthalate (PEN), or polyimide is used as the base film 13.

The magnetic layer 14 is composed of a mixture of ferromagnetic powder, binder, lubricant, reinforcing powder and the like.

For example, $\alpha$-Fe, barium ferrite, Co-Ni, Co-P, $\gamma$-Fe$_2$O$_3$, Fe$_3$O$_4$, Co-containing $\gamma$-Fe$_2$O$_3$, Co-containing $\gamma$-Fe$_3$O$_4$, CrO$_2$, Co, Fe-Ni or the like is used as the ferromagnetic powder.

For example, copolymer of vinyl chloride and vinyl acetate, copolymer of vinyl chloride, vinyl acetate and vinyl alcohol, urethane resin, polyisocyanate compound, radiation-cured resin or the like is used as the binder.

For example, higher fatty acid such as stearic acid and oleic acid, ester of these higher fatty acids, liquid paraffin, squalane, fluorine resin, fluorine oil or the like can be used as the lubricant. A preferred additive ratio of the lubricant relative to the above magnetic powder is 0.1 to 25 wt%, more preferably 1 to 10 wt%.

For example, aluminium oxide, chrome oxide, silicon carbide, silicon nitride or the like is used as the reinforcing powder. A preferred additive ratio of the reinforcing powder relative to the ferromagnetic powder is 0.1 to 25 wt%.

Examples of the specific composition of a magnetic paint are as shown below.

| Example of Composition of Magnetic Paint 1 | |
| --- | --- |
| $\alpha$-Fe (Hc: 131.3$\cdot$10$^3$ A/m (1650 Oe), magnitude of saturation magnetization: 135 emu/g, average size of major axis: 0.25 $\mu$m, average axis (aspect) ratio: 8) | 100 parts by weight |
| copolymer of vinyl chloride, vinyl acetate and vinyl alcohol | 14.1 parts by weight |
| urethane resin | 8.5 parts by weight |
| ternary functional isocyanate compound | 5.6 parts by weight |
| alumina powder (average particle size: 0.43 um) | 20 parts by weight |
| carbon black | 2 parts by weight |
| oleyl oleate | 7 parts by weight |
| cyclohexanone | 150 parts by weight |
| toluene | 150 parts by weight |

| Example of Composition of Magnetic Paint 2 | |
| --- | --- |
| barium ferrite (Hc: 42.2$\cdot$10$^3$ A/m (530 Oe), magnitude of saturation magnetization: 57 emu/g, average particle size: 0.04 $\mu$m) | 100 parts by weight |
| copolymer of vinyl chloride, vinyl acetate and vinyl alcohol | 11.0 parts by weight |
| urethane resin | 6.6 parts by weight |
| ternary functional isocyanate compound | 4.4 parts by weight |
| alumina powder (average particle size: 0.43 $\mu$m) | 15 parts by weight |
| carbon black | 2 parts by weight |
| oleyl oleate | 7 parts by weight |
| cyclohexanone | 150 parts by weight |
| toluene | 150 parts by weight |

The composition shown in the Example of Composition of Magnetic Paint 1 or 2 was sufficiently mixed and dispersed in a ball mill to prepare a magnetic paint and thus obtained magnetic paint was deposited on both surfaces of a 75 micron base film composed of polyethylene terephthalate (PET) and dried so that it had a dried thickness of 0.7 micron, and then the magnetic paint was processed by a calender to form magnetic layers 14a, 14b, respectively.

A multiplicity of continuous or discontinuous groove-shaped recessed portions 15 for tracking servo each having a width of a = 5 micron were concentrically formed on a surface of the second magnetic layer 14b of the thus arranged magnetic disk 2 at intervals corresponding to a track width = b (e.g., 15 microns) by, for example, an emboss processing or the like (refer to Figure 7). As shown in Figure 3, an example of a pattern as a whole of each of the recessed portions 15 for tracking servo is formed concentrically about the center of rotation of the magnetic disk 2, and a space between the recessed portions 15, 15 serves as a recording track portion 16, as shown in Figures 3 and 7.

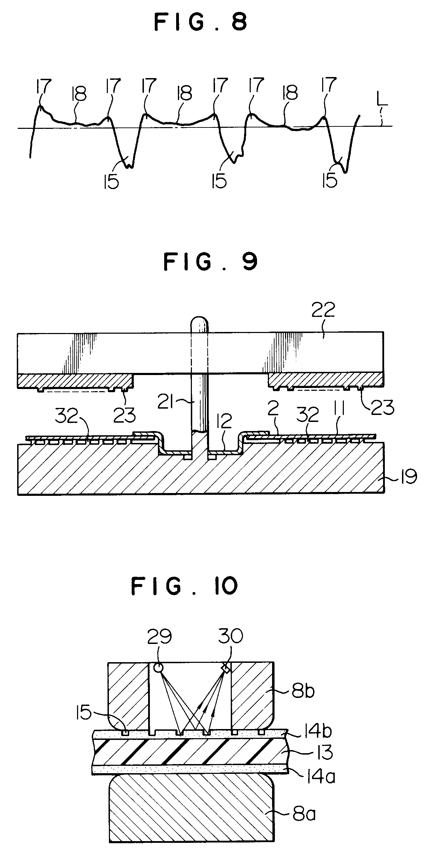

As described later, these recessed portions 15 are formed by compression by a stamper, and as the recessed portions 15 each having an inverted-trapezoid-shaped cross section are formed as shown in Figure 8, the periphery thereof is partially raised and thus projected portions 17 each having a substantially mountain-shaped cross section are continuously or discontinuously formed on either side of the recording track portion 16. Further, lower portions 18 relatively lower than the projected portions 17 (but shallower than the above recessed portions 15) are formed between the projected portions 17, 17 and just confront the magnetic gap (not shown) of the magnetic head unit.

Figure 8 is a chart showing a state or condition of the surface of the second magnetic layer 14b which was measured by a surface roughness meter. As shown in Figure 8, it is found that although the projected portions 17 do not always have the same shape and height, they have the mountain-shaped cross section as a whole and the lower portions 18 thereof are formed substantially at the same level.

As shown in Figure 8, when a reference line L passing through the bottoms of the respective lower portions 18 is drawn, it is preferable that an average depth of the recessed portions 15 from the reference line L is 0.01 to 0.5 micron (about 0.15 micron in the embodiment), an average height of the projected portions 17 from the reference line L is 0.01 to 0.1 micron (about 0.05 micron in the embodiment), and an average height of step from the bottom of the lower portions 18 to the top of the projected portions 17 is 0.01 to 0.1 micron (about 0.05 micron in the embodiment).

Figure 9 is a diagrammatic sectional view for explaining a process for forming the recessed portions 15 for servo tracking. The magnetic disk 2 provided with a center hub 12 is set to a base table 19 which has a guide pin 21 projected therefrom and to be inserted into the central hole 20 of the center hub 12 (refer to Figure 3). The magnetic disk 2 is positioned on the base table 19 in such a manner that the magnetic disk 2 is placed on the base table 19 with the central hole 20 of the center hub 12 inserted through the guide pin 21.

A stamper 22 is vertically movably disposed above the base table 19 in parallel therewith and the vertical movement of the stamper 22 is guided by the guide pin 21 of the base table 19. Further, a multiplicity of fine projections 23 for forming the recessed portions 15 for servo tracking are concentrically formed on the stamper 22.

The stamper 22 is lowered from a state shown in Figure 9 so that the magnetic sheet 11 of the magnetic disk 2 is gripped between the base table 19 and the stamper 22 under a predetermined pressure. With this arrangement, the projections 23 formed to the stamper 22 bite into the surface of the second magnetic layer 14b, and thus the recessed portions 15 each having the substantially-inverted-trapezoid-shaped cross section are formed by compression as shown by Figure 8 as well as the projected portions 17 are formed by a portion of material of the magnetic layer 14b pushed aside.

The thus formed projected portions 17 have a higher filling ratio of magnetic powder, reinforcing powder and binder in the magnetic layer as compared with that of the lower portions 18 and thus have a structure which is resistant to wearing with an increased mechanical strength.

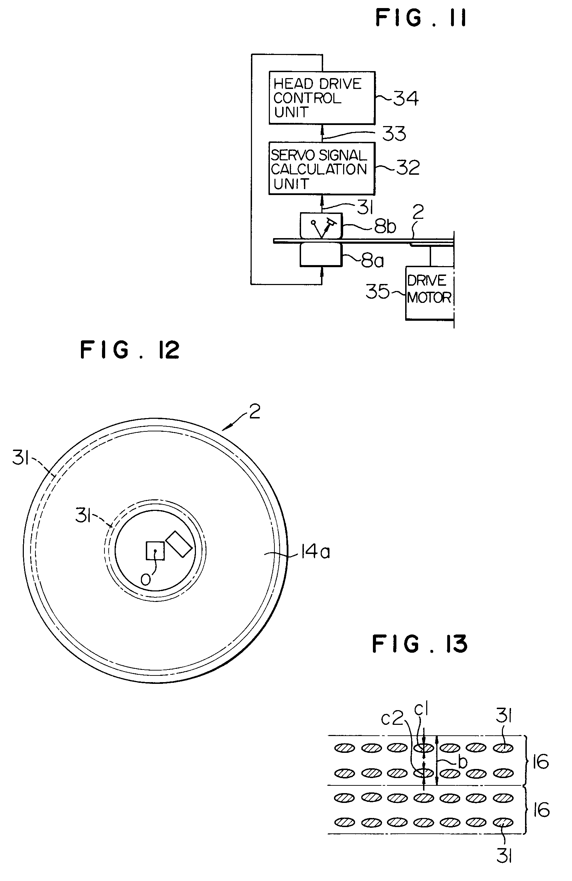

Figures 10 and 11 are diagrammatic views for explaining the tracking servo of the magnetic disk 2. As shown in these Figures, a light emitting device 29 composed, for example, of an LED or the like for emitting a light beam for the tracking servo and a light receiving device 30 (actually, composed of a plurality of sensing devices) for receiving a light beam reflected from the second magnetic layer 14b are integrally provided within the second magnetic head unit 8b confronting the second magnetic layer 14b of the magnetic disk 2.

The portion of the second magnetic head unit 8b where the light emitting device 29 and light receiving device 30 are mounted is opened toward the magnetic disk 2 side. Further, the first magnetic head unit 8a comes into contact with the surface of the first magnetic layer 14a.

A light beam emitted from the light emitting device 29 is reflected by the surface of the second magnetic layer 14b in which the recessed portions 15 for tracking servo are formed and the reflected light beam is received by the light receiving device 30.

As shown in Figure 11, respective sensing signals 31 from the light receiving device 30 are delivered to a servo signal calculation unit 32 and an amount of positional deviation of the magnetic head unit 8a (8b) with respect to the recording track 16, in other words, an amount to be positionally corrected of the magnetic head unit 8a (8b) with respect to the recording track 16 at present is calculated.

When any one of data writing operation, data reading operation and data erasing operation is being

EP 0 511 622 A2

performed at present by, for example, the first magnetic head unit 8a, a position correction control signal 33 determined by the servo signal calculation unit 32 is delivered to a head drive control unit 34 and tracking of the first magnetic head unit 8a is controlled in response to the control signal 33.

On the other hand, when any one of data writing operation, data reading operation and data erasing operation is performed by the second magnetic head 8b, the position correction control signal 33 determined by the servo signal calculation unit 32 is delivered to the head drive control unit 34 and tracking of the second magnetic head unit 8b which is moved integrally with the first magnetic head unit 8a is controlled based on the control signal 33. Reference numeral 35 in Figure 11 is a drive motor for rotating the magnetic disk 2.

Now, a state or condition of a surface of the first magnetic layer 14a will be described with reference to Figures 12 to 14.

The first magnetic layer 14a also has a number of recording track portions 16 formed concentrically about the center of rotation O of the magnetic disk 2 (refer to Figure 12). Then, as shown in Figure 13, a large number of recessed portions 31 are discontinuously formed in the recording track portions 16 concentrically about the center of rotation O of the above recording disk 2. As shown in Figure 13, each of the above recessed portions has an elliptical or oval opening in this embodiment and the major axis direction of each elliptical recessed portion 31 coincides with a lengthwise direction of the recording track portions 16 (in other words, the minor axis direction of each elliptical recessed portion 31 coincides with the widthwise direction of the recording track portions 16).

However, a shape of the opening or a shape, in plan view, of the recessed portion 31 is not limited to the elliptical shape but may be any other suitable shape such as, for example, circle, square, hexagon or the like.

As shown in Figure 9, these recessed portions 31 can be formed simultaneously with the formation of the groove-shaped recessed portions 15 for tracking servo in such a manner that projected portions 32 corresponding to the shape of the recessed portions 31 are previously formed on the surface of the base table 19 and the stamper 22 is pressed thereagainst as described above.

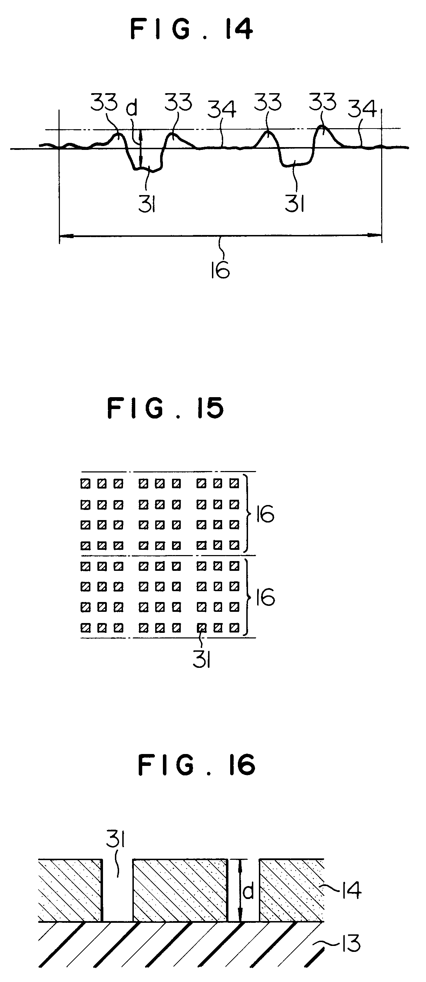

As shown in Figure 14, when the recessed portions 31 are formed by compression as described above, each of the recessed portions 31 has an inverted-trapezoid-shaped cross-section, a portion of material of the magnetic disk corresponding to the recessed portion 31 is raised by being pushed aside, and projected portions 33 each having a mountain-shaped cross-section are formed, in the same way as the case in which the groove-shaped recessed portions 15 for tracking servo are formed. These projected portions 33 have a higher density and thus an increased mechanical strength.

As described above, since the recessed portions 31 are formed in the recording track portions 16 to which information is recorded, a length in a track-widthwise direction of the recessed portions 31 directly affects dropout characteristics.

The inventors has measured relationships between a ratio $[(Tc/b) \times 100 (\%)]$ of a total length Tc in the track-widthwise direction of the recessed portions 31 ($Tc = c1 + c2$, where magnitude of minor axis $c1 = c2$) relative to a track width b, and dropout characteristics and starting torque in the elliptical pattern of the recessed portions 31 shown in Figure 13 under the conditions that an average depth of the recessed portions 31 from a head contact portion (in this example, the extreme end of the projected portions 33) was set to a constant value of 0.15 micron and a length c in the track-widthwise direction was variously changed. Table 1 shows the result of the measurement.

Note that, a magnetic disk of 2 MB was used, analog recording was performed at a line recording density of 17 kfci, and specimens with an average reproduction output of 60% or less were determined to be the specimens in which dropout occurred in this dropout test. In Table 1, $\bigcirc$ represents specimens in which no dropout was caused and x represents specimens in which dropout was caused.

7

## Table 1

(d = 0.15 μm, constant)

| [(Tc/b) × 100] (%) | Presence of Dropout | Starting Torque (g-cm) |
|---|---|---|
| 0 | ○ | 500 |
| 10 | ○ | 280 |
| 20 | ○ | 100 |
| 40 | ○ | 80 |
| 50 | ○ | 80 |
| 55 | × | 80 |
| 60 | × | 80 |

As apparent from Table 1, when the ratio of the total length Tc in the track-widthwise direction of the recessed portions 31 to a track width b is 55% or higher, a spacing loss between the magnetic disk and the magnetic head unit is increased and as a result, dropout is caused. Therefore, the ratio of the total length Tc in the track-widthwise direction of the recessed portions 31 to a track width b must be regulated to 50% or lower. When the relationship between this ratio and the starting torque, the ratio of the total length Tc in the track-widthwise direction of the recessed portions 31 to the track width b is preferably regulated to a range of 20 to 50%.

Next, the average depth d of the recessed portions 31 will be discussed. If wear powder exists on the boundary or interface where a magnetic disk is in intimate contact with a magnetic head unit as described above, the wear of the surface of a magnetic layer is promoted by the rotation of the magnetic disk and the pressing force of the magnetic disk unit.

In the present invention, the above recessed portions 31 are used as a dust collecting and accommodating portion for dusts such as wear powder and the like, and thus if they are too shallow, an effect for collecting the dusts is lowered.

When the dust collecting effect is taken into consideration, the recessed portions 31 are preferably as deeper as possible. When, however, the recessed portions 31 are excessively deeply formed by the compression used in the present embodiment, a very high pressure is needed, which causes the magnetic disk to be deformed and insufficient contact with the magnetic head unit.

Further, a method of forming the recessed portions 31 by partially removing the magnetic layer 14 includes, for example, a laser beam irradiation method, etching method and the like. When, however, the recessed portions 31 are to be produced to a greater depth, these methods are not preferable, because a longer time is needed for this processing and workability is lowered.

When deformation of the magnetic disk caused by the compression method as well as workability in the laser beam irradiation method and etching method are taken into consideration, an average depth of the recessed portions 31 must be regulated to 0.5 micron or less.

From the above-mentioned, when the average depth of the recessed portions 31 is regulated to the range of 0.01 to 0.5 micron and preferably to the range of 0.1 to 0.5 micron, an effect for collecting dusts is improved and further the magnetic disk is not deformed and a working efficiency is not lowered.

Note that when the recessed portions 31 have a relatively large depth of more than 0.5 micron, it is difficult to record information on the recessed portions 31. Therefore, the total length in the recording track-widthwise direction of the recessed portions 31 is preferably regulated to 40% or less of a recording track width in the above range.

Next, the relationship between the depth of the recessed portions 31 and a decrease in a reproduction output will be described. Table 2 shows the relationship between the depth of the recessed portions 31 and the decrease in the reproduction output when a signal is recorded at a recording wavelength (λ) of 2.99 microns, and Table 3 shows the relationship between the depth of the recessed portions 31 and the decrease in a reproduction output when a signal is recorded at a recording wavelength (λ) of 1.50 microns.

8

Note that the total length in the recording track-widthwise direction of the recessed portions 31 is 40% of a recording track width in both of these cases.

Table 2

| Depth of Recessed Portions ($\mu$m) | Decrease in Output (dB) |
| --- | --- |
| $\lambda/4$ = 0.75 | -4.6 |
| $\lambda/6$ = 0.50 | -2.9 |
| $\lambda/8$ = 0.38 | -1.9 |
| $\lambda/10$ = 0.30 | -1.5 |
| $\lambda/20$ = 0.15 | -0.9 |
| $\lambda/40$ = 0.075 | -0.6 |
| $\lambda/80$ = 0.038 | -0.3 |
| $\lambda/100$ = 0.030 | |

Table 3

| Depth of Recessed Portions ($\mu$m) | Decrease in Output (dB) |
| --- | --- |
| $\lambda/4$ = 0.36 | -4.7 |
| $\lambda/6$ = 0.24 | -3.0 |
| $\lambda/8$ = 0.18 | -2.0 |
| $\lambda/10$ = 0.14 | -1.6 |
| $\lambda/20$ = 0.07 | -1.0 |
| $\lambda/40$ = 0.04 | -0.6 |
| $\lambda/80$ = 0.02 | -0.4 |
| $\lambda/100$ = 0.014 | |

As apparent from Tables 2 and 3, when the recessed portions 31 are deeper than $\lambda/8$, a reproduction output of a signal is greatly reduced.

On the other hand, when the recessed portions 31 are shallower than $\lambda/80$, they have almost no capability for collecting and accommodating dusts and the like, although the output is not lowered almost at all. Therefore, a depth of the recessed portions must be regulated to the range of $\lambda/80$ to $\lambda/8$.

Next, the relationship between a height of the projected portions 33 (refer to Figure 14) and dropout characteristics will be described.

When the mountain-shaped projected portions 33 are formed as described above, the magnetic head unit mainly comes into contact with the projected portions 33. As a result, since an area where the projected portions 33 are in contact with the magnetic head unit is reduced and a contact resistance is reduced accordingly, there is an advantage that the magnetic layer has improved resistance to wear. When, however, the projected portions 33 are too high, a problem arises in a spacing loss between a flat surface 34 and the magnetic head unit.

The inventors have examined the occurrence of dropout and the average starting torque of the magnetic disk by variously changing an average height of the projected portions. Table 4 shows the result of the examination.

9

Table 4

| Average Height of Projected Portions (μm) | Presence of Dropout |
|---|---|
| 0.00 | ○ |
| 0.01 | ○ |
| 0.02 | ○ |
| 0.05 | ○ |
| 0.10 | ○ |
| 0.15 | △ |

Note, in Table 5 the symbol △ shows a specimen in which dropout is sometimes caused and sometimes not caused.

As apparent from Table 4, since there is a possibility of the occurrence of dropout when the average height of the projected portions 33 from the flat surface 34 of the magnetic layer is 0.15 micron or more, the projected portions 33 preferably have an average height of 0.1 micron or less.

When the projected portions 33 have an average height less than 0.01 micron, they will have too intimate a contact with the magnetic head unit and a starting torque is increased accordingly. Therefore, the average height of the projected portions 33 from the flat surface 34 of the magnetic layer is regulated to the range of 0.01 to 0.10 micron and preferably to the range of 0.02 to 0.10 micron in order to prevent the occurrence of dropout and restrict a starting torque to a low level.

The average height of the projected portions 33 can be controlled by suitably adjusting a shape of the projected portions 32 for forming the recessed portions 31, pressure, a composition of the magnetic layer 14 and the like (refer to Figure 9).

Figure 15 is a diagrammatic plan view showing a modification of the recessed portions 31 formed to a square shape, and each of blocks or clusters of the recessed portions 31 are formed by a plurality of small recessed portions 31.

In this cluster pattern of the recessed portions 31, the average depth (d) of the recessed portions 31 is regulated to the range of 0.01 to 0.5 micron, the average height of the projected portions 33 formed by the recessed portions 31 is regulated to the range of 0.01 to 0.10 micron, and a ratio of a total length (Tc) in a track-widthwise direction of the recessed portions 31 to a track width b is regulated to 50% or less.

Figure 16 shows a modification of the recessed portions 31, wherein the recessed portions 31 are formed by partially removing the magnetic layer 14 by the irradiation of a laser beam or etching, where the base film 13 is exposed at the portions from which the magnetic layer 14 is removed. As a result, in this example the average depth d of the recessed portions 31 is equal to an average film thickness of the magnetic layer 14.

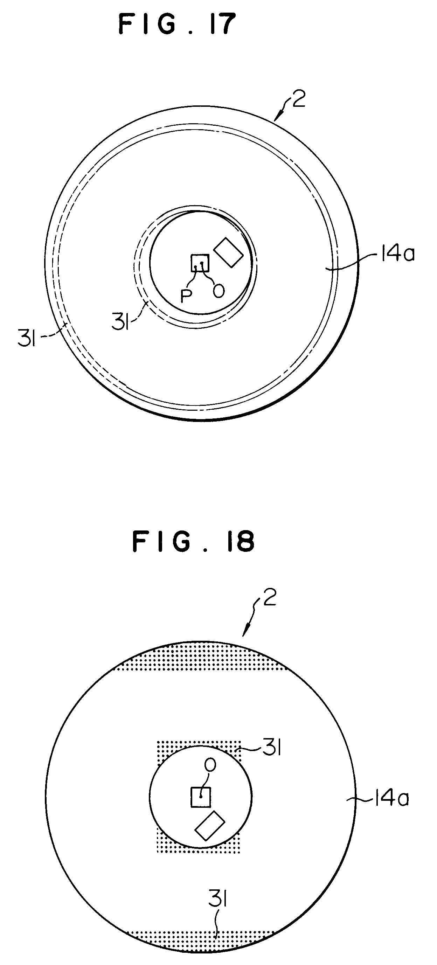

Figure 17 is a diagrammatic plan view showing a modified pattern of the recessed portions 31 of the magnetic disk 2 as a whole, wherein a center P of the recessed portions 31 is slightly deviated from the center of rotation O of the magnetic disk 2, where the recessed portions 31 are concentrically and discontinuously formed about the center P. Therefore, the recessed portions 31 are concentrically and discontinuously formed a little eccentrically with respect to the center of rotation O of the magnetic disk 2.

Figure 18 is a diagrammatic plan view showing another modified pattern of the recessed portions 31 of the magnetic disk 2 as a whole, wherein the recessed portions 31 are discontinuously formed to a lattice shape over substantially the entire surface of the magnetic disk 2.

Although the recessed portions 31 are regularly arranged in this example, they may be formed at random over substantially the entire surface of the magnetic disk 2.

Although the groove-shaped recessed portions 15 are continuously formed in a surface of the magnetic disk 2 and the recessed portions 31 for reducing a contact resistance with a magnetic head are formed in the other surface of the magnetic disk 2 in the above embodiments, this invention is not limited thereto and the recessed portions 31 may be formed on both surfaces of the magnetic disk 2.

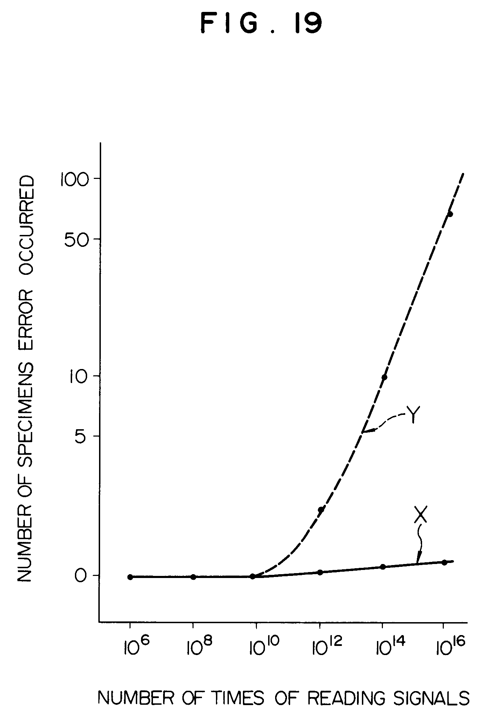

Errors in a 88.9 mm (3.5-inch) flexible magnetic disk according to the embodiment shown in Figures 13 and 14 (the average depth of the recessed portions 31 d = 0.15 micron, [(Tc/b) × 100] = 40%, the height of the projected portions 33 from the flat surface 34 = 0.05 micron) and errors in a conventional magnetic disk of the same type were examined, and Figure 19 shows the result of the examination.

In Figure 19, an abscissa represents the number of times of reading signals and an ordinates represents the number of specimens in which error occurred. Each magnetic disk included 100 specimens and signals recorded to each magnetic disk were read by a random seeking of a magnetic head unit and the number of errors occurred at that time was counted. Note that the solid line X in Figure 19 represents the results in the magnetic disk according to the embodiment of the present invention and the dotted line Y represents the results in the conventional magnetic disk.

As apparent from Figure 19, when signals were read more than $10^{10}$ times in the conventional magnetic disk (dotted line Y), the number of specimens in which a signal reading error occurred was abruptly increased by the adverse effect of wear powder, and when signals were read $10^{16}$ times, a signal reading error occurred in almost all the specimens.

Whereas, the number of signal reading errors in the magnetic disk according to the present invention was very small even if signals were read $10^{16}$ times therefrom. Therefore, it has been proved that the magnetic disks according to the embodiment of the present invention have a very stable performance.

Since the magnetic disk according to the present invention is arranged as described above, the magnetic disk reduces a contact resistance (friction resistance) thereof with a magnetic head unit while suppressing the occurrence of dropout and utilizes recessed portions for collecting dusts and the like such as wear powder.

As a result, the adverse effect of the dusts and the like applied between a magnetic layer and a head surface can be greatly reduced and thus a magnetic disk with excellent durability and high reliability can be provided.

**Claims**

1.  A magnetic disk (2) having a substrate (13) composed of a non-magnetic material and a magnetic layer (14; 14a, 4b) formed on a surface thereof, comprising a multiplicity of discontinuous recessed portions (15; 31), formed on the recording tracks (16) of said magnetic layer, an average depth of which from a portion where said magnetic disk (2) comes into contact with a magnetic head unit (8a; 8b) is regulated to a range of 0.01 to 0.5 micron, wherein a total length in a recording track-widthwise direction of said recessed portions (15; 31) is regulated to 50 % or less of a recording track width (b).

2.  A magnetic disk according to claim 1, wherein an average depth of said recessed portions (15; 31) is regulated to a range of 0.1 to 0.5 micron and a total length in a recording track-widthwise direction of said recessed portions is regulated to 40 % or less of a recording track width (b).

3.  A magnetic disk according to claim 1, wherein said magnetic layer (14; 14a, 14b) includes magnetic powder and binder and are formed by deposition, and said recessed portions (15; 31) are formed by partially compressing said magnetic layer.

4.  A magnetic disk according to claim 3, wherein projected portions (17; 33) projected from a flat surface of said magnetic layer (14; 14a, 14b) by an average of 0.01 to 0.1 micron are formed around a periphery of said recessed portions (15; 31) by formation of said recessed portions by compression.

5.  A magnetic disk according to claim 3, wherein said recessed portions (15; 31) have a substantially-inverted-trapezoid-shaped cross section.

6.  A magnetic disk according to claim 1, wherein said discontinuous recessed portions (15; 31) are concentrically formed about a center of rotation of said magnetic disk (2).

7.  A magnetic disk according to claim 1, wherein said discontinuous recessed portions (31) are formed eccentrically with respect to the center of rotation of said magnetic disk (2).

8.  A magnetic disk according to claim 1, wherein magnetic layers (14a, 14b) are formed on both surfaces of said substrate (13) and said discontinuous recessed portions (15; 31) are formed in said both magnetic layers.

9.  A magnetic disk according to claim 1, wherein magnetic layers (14a, 14b) are formed on both surfaces of said substrates (13), said discontinuous recessed portions (31) are formed in a recording track of one of said magnetic layers (14a), and recessed portions (15) for tracking servo are formed in the other of said magnetic layers (14b) adjacent to a recording track.

10. A magnetic disk (2) having a substrate (13) composed of a non-magnetic material and a magnetic layer (14; 14a, 14b) formed on a surface thereof, comprising discontinuous recessed portions (15; 31) formed in a recording track of said magnetic layer (14; 14a, 14b) and having an average depth from a portion where said magnetic disk (2) comes into contact with a magnetic head unit (8a; 8b) in a range of 1/80 to 1/8 of a shortest wavelength of a signal recorded to said magnetic disk (2), wherein a total length in a recording track-widthwise direction of said recessed portions is regulated to 50 % or less of a recording track width.

11. A magnetic disk according to claim 1, wherein an average depth of said recessed portions (15; 31) is regulated to a range of 1/80 to 1/8 of a wavelength of a signal recorded to said magnetic disk (2) and a total length in a recording track-widthwise direction of said recessed portions (15; 31) is regulated to 40 % or less of a recording track width (b).

# FIG . 1

# FIG . 2

# FIG . 3

# FIG . 4

FIG. 5

FIG. 6

FIG. 7

FIG. 8

FIG. 9

FIG. 10

FIG . 11

HEAD DRIVE
CONTROL
UNIT ~34

~33

SERVO SIGNAL
CALCULATION
UNIT ~32

~31

~8b

2

~8a

35~ DRIVE
MOTOR

FIG . 12

2

31~

31~

14a

O

FIG . 13

c2 c1 31

b

16

16

31

# FIG. 14

# FIG. 15

# FIG. 16

## FIG. 17

## FIG. 18

# FIG. 19

# FIG. 20

# FIG. 21